# EUROPEAN PATENT APPLICATION

(11) **EP 4 759 942 A1**
(43) Date of publication of application: **17.06.2026**
(21) Application number: 24900394.8
(22) Date of filing: 14.11.2024
(51) Int. Cl.: C21B 13/00, C10B 53/02, C21B 11/00

(54) **METHOD FOR OPERATING REDUCTION FURNACE AND METHOD FOR PRODUCING REDUCED IRON**

(30) Priority: 05.12.2023 JP 2023205469
(71) Applicant: JFE Steel Corporation, Tokyo, 100-0011 (JP)
(72) Inventor: MORIYA, Kota, Tokyo 100-0011 (JP); TERUI, Koki, Tokyo 100-0011 (JP); NAKAHARA, Yoshiko, Tokyo 100-0011 (JP)
(74) Representative: Grünecker Patent- und Rechtsanwälte PartG mbB
(86) International application number: PCT/JP2024/040539
(87) International publication number: WO 2025/121099

(57) **Abstract**

A method of operating a reduction furnace is provided that makes it possible to decrease the amount of natural gas used without requiring major modifications to existing apparatus. Iron oxide and solid carbonaceous material are charged into the reduction furnace.

## Description

### TECHNICAL FIELD

The present disclosure relates to a method of operating a reduction furnace and a method of producing reduced iron.

### BACKGROUND

In recent years, there has been a strong demand for energy savings in steelworks against the backdrop of global environmental issues and fossil fuel depletion issues. The raw material for iron is mainly iron oxide such as iron ore, and a reduction process to reduce this iron ore is essential at steelworks. The most widespread and common reduction process worldwide uses a blast furnace. In a blast furnace, coke or pulverized coal reacts with oxygen in hot blast (air heated to about 1200 °C) from a tuyere. This reaction produces CO and H₂ as reducing gases, which are used to reduce the iron ore and the like in the furnace. Recent improvements in blast furnace operation technology have decreased the reducing agent rate (the amount of coke and pulverized coal used per tonne of hot metal produced) to about 500 kg/t, and the reducing agent rate has already almost reached a lower limit. Therefore, no further significant decrease in the reducing agent rate is expected.

On the other hand, a method of producing reduced iron using a vertical reduction furnace (hereinafter also referred to as a shaft furnace) is also widely used. In this method, the reduction furnace is charged with sintered ore, pellets, or other agglomerated iron ore as the iron oxide raw material (hereinafter also simply referred to as iron oxide). Reducing gas including CO and H₂ is then blown into the reduction furnace to reduce the iron oxide to produce reduced iron. In this method, natural gas or the like is used as the feed gas for the reducing gas. This feed gas is heated and reformed together with top gas in a reformer. This produces reducing gas. Here, the top gas is gas after the iron oxide is reduced in the reduction furnace, and is typically discharged from the top of the reduction furnace. The reducing gas is blown into the reduction furnace and reacts with iron oxide supplied from the top of the furnace. The iron oxide is then reduced to reduced iron. The reduced iron is then cooled in a region below where the reducing gas is blown into the reduction furnace, and then discharged from a lower portion of the reduction furnace.

Further, as mentioned above, the top gas, which is gas after iron oxide is reduced, is discharged from the reduction furnace, for example, from the top of the furnace. After dust collection and cooling is applied to the top gas, some is fed to the reformer as raw material for reformed gas. Further, remaining top gas is used as fuel gas for the reformer. In this method, the top gas used as fuel gas for the reformer is normally discharged out of the system.

As such a reduced iron production process, for example, Patent Literature (PTL) 1 describes a method of producing reduced iron by reforming exhaust gas from a reduction furnace and natural gas in a reformer to produce reducing gas consisting mainly of CO and H₂, blowing the reducing gas into the reduction furnace, and reducing iron oxide in the reduction furnace.

Further, PTL 2 describes a method of producing reduced iron by partially combusting a carbonaceous raw material containing, in addition to coal, one or both of biomass and waste plastic, or coal (hereinafter also collectively referred to as carbonaceous raw material) with oxygen to produce a reducing gas, and then blowing the reducing gas into a reduction furnace.

### CITATION LIST

### Patent Literature

PTL 1: JP 2017-088912 A
PTL 2: JP 4250472 B2

### SUMMARY

### (Technical Problem)

The method described in PTL 1 uses externally supplied natural gas for the production of reducing gas. Natural gas reserves vary greatly by region. Further, natural gas is a gas, and therefore transportation costs are higher than those of a solid. Therefore, particularly in regions where natural gas reserves are scarce, there is a demand to decrease the amount of natural gas used from the standpoints of both operation stability and cost reduction.

Further, the method described in PTL 2 requires a combustion apparatus for partially combusting the carbonaceous raw material. However, existing commonly used shaft furnaces usually do not have such a combustion apparatus. Therefore, when reduction furnace production is carried out by the method described in PTL 2, a large cost is incurred for expansion.

The present disclosure is made in view of the above-described circumstances, and it would be helpful to provide a method of operating a reduction furnace that can decrease the amount of natural gas used without requiring major modifications to existing apparatus. Further, it would be helpful to provide a method of producing reduced iron that produces reduced iron by the above-mentioned method of operating a reduction furnace. Hereinafter, any numerical range expressed using "to" means a range that includes the numerical values before and after "to" as the lower limit value and the upper limit value, respectively.

### (Solution to Problem)

In order to solve the problems described above, the inventors have carried out various studies and have made the following discoveries. That is, by simultaneously charging solid carbonaceous material, particularly solid carbonaceous material having a volatile content of 40 mass% or more, in addition to iron oxide into a reduction furnace, and preferably by appropriately controlling a mass ratio of the solid carbonaceous material to the iron oxide charged into the reduction furnace, it becomes possible to decrease the amount of natural gas used without requiring major modifications to existing apparatus. The present disclosure is based on these discoveries and further studies.

Primary features of the present disclosure are as follows.
1. A method of operating a reduction furnace, the method comprising:
   a charging process of charging iron oxide and solid carbonaceous material into the reduction furnace;
   a reducing gas injection process of blowing a reducing gas containing CO and H₂ into the reduction furnace; and
   a reduction process of reducing the iron oxide in the reduction furnace to obtain reduced iron.
2. The method of operating a reduction furnace according to 1, above, wherein the solid carbonaceous material is charged into the reduction furnace from the top of the furnace together with the iron oxide.
3. The method of operating a reduction furnace according to 1 or 2, above, wherein a mass ratio of the solid carbonaceous material to the iron oxide charged into the reduction furnace is 0.010 to 0.050.
4. The method of operating a reduction furnace according to any one of 1 to 3, above, wherein at least one of biomass or plastic is used as the solid carbonaceous material.
5. The method of operating a reduction furnace according to any one of 1 to 4, above, wherein the solid carbonaceous material used has a volatile content of 40 mass% or more.
6. The method of operating a reduction furnace according to any one of 1 to 4, above, wherein the solid carbonaceous material used has a volatile content of 40 mass% or more, and the mass ratio of the solid carbonaceous material to the iron oxide charged into the reduction furnace is 0.020 to 0.045.
7. The method of operating a reduction furnace according to any one of 1 to 6, above, further comprising:
   a distribution process of distributing top gas discharged from the reduction furnace into a first top gas and a second top gas; and
   a reforming process of using the first top gas and methane-containing gas as feed gas to obtain the reducing gas from the feed gas.
8. A method of producing reduced iron, comprising producing reduced iron by the method of operating a reduction furnace according to any one of 1 to 7, above.

### (Advantageous Effect)

According to the present disclosure, the amount of natural gas used can be decreased without requiring major modifications to existing apparatus.

### BRIEF DESCRIPTION OF THE DRAWINGS

In the accompanying drawings:

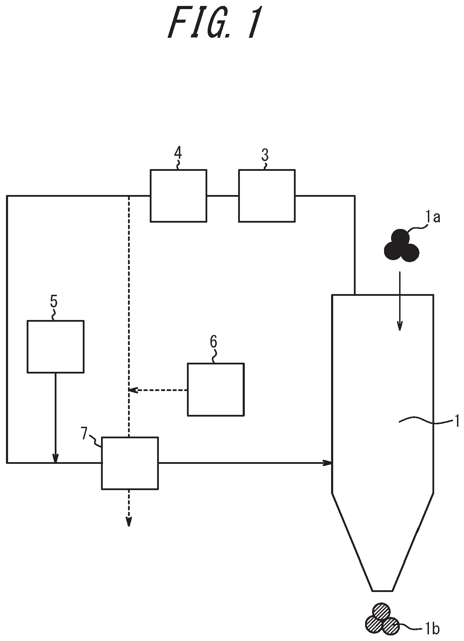

FIG. 1 is a schematic diagram illustrating an example of a reduced iron production process.

### DETAILED DESCRIPTION

The following describes a method of operating a reduction furnace according to an embodiment of the present disclosure.

The method of operating a reduction furnace according to an embodiment of the present disclosure includes:
a charging process of charging iron oxide and solid carbonaceous material into the reduction furnace;
a reducing gas injection process of blowing a reducing gas containing CO and H₂ into the reduction furnace; and
a reduction process of reducing the iron oxide in the reduction furnace to obtain reduced iron,
and optionally further includes:
   a distribution process of distributing top gas discharged from the reduction furnace into a first top gas and a second top gas; and
   a reforming process of using the first top gas and methane-containing gas as feed gas to obtain the reducing gas from the feed gas.

FIG. 1 is a schematic diagram illustrating an example of a reduced iron production process to which the method of operating a reduction furnace according to an embodiment of the present disclosure can be applied. In the drawing, reference sign 1 is a reduction furnace, 1a is iron oxide, 1b is reduced iron, 3 is a deduster, 4 is a dehydrator, 5 is a methane-containing gas supply, 6 is an air supply, and 7 is a reformer.

In the example of the reduced iron production process illustrated in FIG. 1, the iron oxide 1a is charged from the top of the reduction furnace 1 and gradually descends. There, the iron oxide 1a is reduced by blowing in high-temperature reducing gas from a central portion of the reduction furnace 1. The reduced iron 1b is then discharged from a lower portion of the reduction furnace 1. In this process, top gas containing mainly CO, CO₂, H₂, and H₂O is discharged from the top of the reduction furnace 1. This top gas is subjected to dust removal by the deduster 3. The top gas is then subjected to moisture adjustment in the dehydrator 4, and a portion thereof is fed to the reformer 7 as the first top gas. The reformer 7 is supplied with the methane-containing gas, for example, natural gas, together with the first top gas. The supplied gas is then heated in the reformer 7. A reforming reaction then occurs, producing high-temperature reducing gas containing mainly CO and H₂. This reducing gas is then blown into the reduction furnace. The remaining portion of the top gas is used as the second top gas, for example, as a heating fuel in the combustion chamber of the reformer 7. After combustion as fuel for heating, the second top gas still containing CO₂ is normally discharged out of the system. When reduced iron is produced using this example of a conventional production process, approximately a little more than 1 tonne of CO₂ is discharged out of the circulation system when 1 tonne of reduced iron is produced.

In the method of operating a reduction furnace according to an embodiment of the present disclosure, it is important to simultaneously charge the solid carbonaceous material into the reduction furnace in addition to the iron oxide. The charging process of simultaneously charging the solid carbonaceous material in addition to the iron oxide into the reduction furnace is described below. The distribution process and the reforming process may be carried out in accordance with conventional methods, for example, in the same manner as in the above-described production process, and therefore description is omitted here.

### • Charging process

In the method of operating a reduction furnace according to an embodiment of the present disclosure, the solid carbonaceous material is simultaneously charged into the reduction furnace in addition to the iron oxide. The solid carbonaceous material charged into the reduction furnace is heated while descending within the furnace. In this process, the solid carbonaceous material is thermally decomposed or reacts with CO₂ and H₂O in the reduction furnace to become gaseous hydrocarbon, CO, and H₂ (hereinafter also referred to as gaseous hydrocarbon and the like). The gaseous hydrocarbon and the like are consumed in the reduction reaction of iron oxide in the reduction furnace. Further, the gaseous hydrocarbon and the like are discharged as top gas and are, for example, supplied to a reformer as a raw material for reducing gas or a fuel for heating. That is, it is possible to decrease the amount of methane-containing gas, specifically natural gas, used as a raw material for the reducing gas by the amount of the gaseous hydrocarbon and the like generated from the solid carbonaceous material in the reduction furnace.

Here, the mass ratio of the solid carbonaceous material to the iron oxide charged into the reduction furnace ([solid carbonaceous material (kg/t-DRI)]/[iron oxide (kg/t-DRI)], hereinafter also referred to as solid carbonaceous material/iron oxide) is preferably 0.010 to 0.050. Here, kg/t-DRI is the unit consumption per tonne of reduced iron. When the solid carbonaceous material/iron oxide is 0.010 or more, the effect of decreasing the amount of natural gas used as a raw material for the reducing gas is enhanced. On the other hand, charging the solid carbonaceous material into the reduction furnace may result in the generation of unreacted residue. Most small-size residue is pushed out of the furnace by the rising gas in the reduction furnace. Further, some residue remains in the lower portion of the reduction furnace and contributes to carburization of the reduced iron. However, when a large amount of residue remains in the lower portion of the reduction furnace, the outlet for the reduced iron from the reduction furnace may easily become clogged, which may result in a decrease in reaction efficiency. Further, when the reduced iron discharged from the reduction furnace contains a large amount of residue, a process of separating the reduced iron from the residue may be required. The solid carbonaceous material/iron oxide is therefore preferably 0.050 or less. The solid carbonaceous material/iron oxide is more preferably 0.015 or more. The solid carbonaceous material/iron oxide is more preferably 0.045 or less. In particular, when using the solid carbonaceous material having a volatile content of 40 mass% or more, as described below, the solid carbonaceous material/iron oxide is more preferably 0.020 to 0.045. The higher the volatile content of the solid carbonaceous material, the lower the specific gravity. Therefore, when using the solid carbonaceous material having a volatile content of 40 mass% or more, the effect of reducing the amount of natural gas used can be further enhanced when the solid carbonaceous material/iron oxide is 0.020 or more. On the other hand, solid carbonaceous material having a high volatile content has a high water content, and when such solid carbonaceous material is used in excess, there is a risk of hindering the heating of the raw material charged into the reduction furnace while at the top portion of the reduction furnace. Therefore, when using the solid carbonaceous material having a volatile content of 40 mass% or more, the solid carbonaceous material/iron oxide is preferably 0.045 or less.

Further, the type of the solid carbonaceous material is not particularly limited, and examples include biomass, plastic, and coal. Among these, biomass is a carbon-neutral raw material, so when biomass is used as the solid carbonaceous material, it is possible to substantially decrease CO₂ emissions from the production process by the amount of biomass used, which is particularly advantageous. The plastic may be virgin or used plastic. Further, used plastic conceptually includes waste plastic, plastics that are not intended to be discarded, factory offcuts, and the like. In particular, waste plastic is a resource that should be actively utilized.

As for the properties of the solid carbonaceous material to be used, the volatile content of the solid carbonaceous material is preferably 40 mass% or more (40 mass% to 100 mass%). As described above, it is possible to decrease the amount of natural gas used as a raw material for the reducing gas by the amount of the gaseous hydrocarbon and the like generated from the solid carbonaceous material in the reduction furnace. Therefore, when the mass ratio of iron oxide to solid carbonaceous material is the same, the use of solid carbonaceous material having a larger volatile content is more effective in decreasing the amount of natural gas used. It is also advantageous in terms of transportation costs. Further, it is also advantageous in that residue remaining in the lower portion of the reduction furnace is decreased. Therefore, it is preferable to use a solid carbonaceous material having a volatile content of 40 mass% or more. Further, it is more preferable to use a solid carbonaceous material having a volatile content of 70 mass% or more. It is even more preferable to use a solid carbonaceous material having a volatile content of 85 mass% or more. An upper limit of the volatile content of the solid carbonaceous material is not particularly limited, and may be 100 mass%. In addition to volatile content, the solid carbonaceous material contains ash and moisture, with the remainder being fixed carbon.

The volatile content of the solid carbonaceous material may be measured in accordance with JIS M 8812:2006.

It is also desirable to use a solid carbonaceous material having a thermal decomposition temperature that is preferably 900 °C or lower. The thermal decomposition temperature is more preferably 700 °C or lower. Further, it is desirable to use a solid carbonaceous material having a mass fraction of gangue components that is preferably 5 % or less. The mass fraction is more preferably 3 % or less.

The properties of biomass, plastics, coal, and the like, particularly the volatile content, vary depending on the type, place of origin, and the like. Therefore, from solid carbonaceous materials such as various biomass, plastics, and coal, it is preferable to select solid carbonaceous material that has a volatile content of 40 mass% or more.

Further, the method of charging the solid carbonaceous material into the reduction furnace is not particularly limited. For example, the solid carbonaceous material may be charged into the reduction furnace simultaneously with the iron oxide through the same charging port as the iron oxide, preferably through a charging port provided at the top of the reduction furnace.

### [Reducing gas injection process]

The reducing gas containing CO and H₂ is blown into the reduction furnace. The gas composition of the reducing gas is, for example, CO: 1 vol% to 60 vol%, H₂: 40 vol% to 99 vol%, with the balance being 0 vol% to 30 vol%.

### [Reduction process]

In the reduction process, the iron oxide is reduced with a reducing gas to obtain reduced iron. The iron oxide is also reduced by the gaseous hydrocarbon and the like generated from the solid carbonaceous material charged into the direct reduction furnace.

Conditions other than those described above are not particularly limited, and a conventional method may be used.

For example, the temperature at which the reducing gas is blown can be 750 °C to 1100 °C.

The iron oxide used in the method of operating a reduction furnace according to an embodiment of the present disclosure is, for example, iron ore. Examples include lumped iron ore (lump ore), iron oxide pellets (powdered iron ore hardened into a spherical shape), and the like. The grade of iron ore used as the iron oxide, that is, the iron content, is not particularly limited. From the perspective of reduction in a shaft furnace, the iron content is typically preferably 65 mass% or more.

The method of operating a reduction furnace according to an embodiment of the present disclosure describes, among other things, the use of a shaft furnace as a direct reduction ironmaking process. However, the type of reduction furnace is not limited to this, and may be a fluidized bed, a rotary kiln, a rotary hearth furnace (RHF), or the like. Shaft furnaces are preferred as reduction furnaces because of their high production efficiency, ratio of utilization and operational stability. Further, the majority of direct reduction furnaces in operation worldwide are Midrex^{®} (Midrex is a registered trademark in Japan, other countries, or both) and Hyl^{®} (Hyl is a registered trademark in Japan, other countries, or both), which are shaft furnace systems.

Further, the method of producing reduced iron according to an embodiment of the present disclosure produces reduced iron by the above-described method of operating a reduction furnace. Conditions other than those described above are not particularly limited, and a conventional method may be used.

### EXAMPLES

Examples of the present disclosure are described below. Using an existing apparatus having the production process illustrated in FIG. 1, reduced iron was produced by charging solid carbonaceous material together with iron oxide into a reduction furnace through an iron oxide charging port at the top of the reduction furnace in accordance with the conditions listed in Table 1. For a comparative example, reduced iron was produced under the condition that no solid carbonaceous material was charged into the reduction furnace. Under all conditions, the operation period was 28 days. In Table 1, the operating parameters are listed in terms of unit consumption per tonne of reduced iron produced. For example, when 1300 kg of iron oxide pellets are used to produce 1 tonne of reduced iron, the amount of iron oxide pellets used is expressed as 1300 kg/t-DRI. When 3000 t/d of reduced iron is to be produced, this amount can be multiplied by 3000 to obtain the daily parameters.

Further, under all conditions, iron oxide pellets as raw material were charged into the reduction furnace at 1394 kg/t in a charging process. In the reducing gas injection process, reducing gas heated to 980 °C was blown in from a middle portion of the reduction furnace to reduce the iron oxide pellets to obtain reduced iron. The top gas discharged from the reduction furnace was subjected to dust removal and dehydration, and then the top gas was distributed into a first top gas used as a reducing gas raw material and a second top gas used as a heating fuel. Of these, the first top gas was mixed with natural gas, and the mixed gas was then supplied to a reformer to obtain a reducing gas containing CO and H₂. Further, the second top gas was combusted with air in the combustion chamber of the reformer. Conditions other than those described above and in Table 1 were in accordance with conventional methods or those described in the general description.

### [Table 1]

**Table 1**

| | | | Example 1 | Example 2 | Example 3 | Example 4 | Example 5 | Example 6 | Example 7 | Comparative Example 1 |
|---|---|---|---|---|---|---|---|---|---|---|
| Charged raw material | iron oxide | kg/t-DRI | 1394 | 1394 | 1394 | 1394 | 1394 | 1394 | 1394 | 1394 |
| | solid carbonaceous material | kg/t-DRI | 20 | 20 | 20 | 34 | 63 | 20 | 49 | 0 |
| | solid carbonaceous material/iron oxide | - | 0.014 | 0.014 | 0.014 | 0.024 | 0.045 | 0.014 | 0.035 | 0 |
| | solid carbonaceous material type | - | coal | coal | biomass | biomass | biomass | waste plastic | waste plastic | - |
| Solid carbonaceous material properties | volatile content | mass% | 35 | 50 | 74 | 74 | 74 | 89 | 89 | - |
| | ash | mass% | 5 | 4.5 | 3 | 3 | 3 | 1 | 1 | - |
| Reducing gas raw material | natural gas | Nm³/t-DRI | 255 | 253 | 252 | 248 | 242 | 237 | 210 | 256 |
| CO₂ emission per unit consumption | | t-CO₂/t-DRI | 1.20 | 1.20 | 1.18 | 1.16 | 1.13 | 1.11 | 0.98 | 1.20 |

For all of the examples according to the present disclosure, stable operation of the reduction furnace was possible over the entire operation period of 28 days, while also decreasing the amount of natural gas used compared to the comparative example (where reduced iron was produced under conditions in which no solid carbonaceous material was charged into the reduction furnace). In particular, for the examples using solid carbonaceous material having a volatile content of 40 mass% or more, a greater effect of decreasing the amount of natural gas used was obtained. It was also advantageous in terms of the effect of decreasing CO₂ emission.

### REFERENCE SIGNS LIST

- 1: reduction furnace
- 1a: iron oxide
- 1b: reduced iron
- 3: deduster
- 4: dehydrator
- 5: natural gas supply
- 6: air supply
- 7: reformer

## Claims

1. A method of operating a reduction furnace, the method comprising:
a charging process of charging iron oxide and solid carbonaceous material into the reduction furnace;
a reducing gas injection process of blowing a reducing gas containing CO and H₂ into the reduction furnace; and
a reduction process of reducing the iron oxide in the reduction furnace to obtain reduced iron.

2. The method of operating a reduction furnace according to claim 1, wherein the solid carbonaceous material is charged into the reduction furnace from the top of the furnace together with the iron oxide.

3. The method of operating a reduction furnace according to claim 1 or 2, wherein a mass ratio of the solid carbonaceous material to the iron oxide charged into the reduction furnace is 0.010 to 0.050.

4. The method of operating a reduction furnace according to any one of claims 1 to 3, wherein at least one of biomass or plastic is used as the solid carbonaceous material.

5. The method of operating a reduction furnace according to any one of claims 1 to 4, wherein the solid carbonaceous material used has a volatile content of 40 mass% or more.

6. The method of operating a reduction furnace according to any one of claims 1 to 4, wherein the solid carbonaceous material used has a volatile content of 40 mass% or more, and the mass ratio of the solid carbonaceous material to the iron oxide charged into the reduction furnace is 0.020 to 0.045.

7. The method of operating a reduction furnace according to any one of claims 1 to 6, further comprising:
a distribution process of distributing top gas discharged from the reduction furnace into a first top gas and a second top gas; and
a reforming process of using the first top gas and methane-containing gas as feed gas to obtain the reducing gas from the feed gas.

8. A method of producing reduced iron, comprising producing reduced iron by the method of operating a reduction furnace according to any one of claims 1 to 7.
